(19) **Europäisches Patentamt**

**European Patent Office**

**Office européen des brevets**

(11) **EP 0 899 085 B1**

(12) **EUROPÄISCHE PATENTSCHRIFT**

(45) Veröffentlichungstag und Bekanntmachung des Hinweises auf die Patenterteilung:
**08.01.2003 Patentblatt 2003/02**

(51) Int Cl.⁷: **B29C 65/20**, B29C 65/14
// B29L23:00

(21) Anmeldenummer: **98810631.6**

(22) Anmeldetag: **06.07.1998**

(54) **Verfahren zum Verschweissen von Kunststoffteilen**

Process for welding plastic parts

Procédé pour le soudage de pièces en matière synthétique

(84) Benannte Vertragsstaaten:
**AT BE CH DE DK ES FI FR GB IE IT LI NL PT SE**

(30) Priorität: **01.09.1997 DE 19738100**

(43) Veröffentlichungstag der Anmeldung:
**03.03.1999 Patentblatt 1999/09**

(73) Patentinhaber: **Georg Fischer Rohrleitungssysteme AG**
**8201 Schaffhausen (CH)**

(72) Erfinder:
• **Haug Peter**
**78224 Singen (DE)**
• **Wermelinger Jörg**
**8200 Schaffhausen (CH)**

(74) Vertreter: **Weiss, Wolfgang, Dr.**
**c/o Georg Fischer AG**
**Patentabteilung - MFB 2661**
**Amsler-Laffonstrasse 9**
**8201 Schaffhausen (CH)**

(56) Entgegenhaltungen:
EP-A- 0 263 980      DD-A- 273 394
DE-A- 3 628 246      US-A- 3 939 027
US-A- 4 645 896

• DATABASE WPI Section Ch, Week 199004 Derwent Publications Ltd., London, GB; Class A35, AN 1988-359102 XP002123645 -& DD 270 819 A (LICHOLETOV V V), 16. August 1989 (1989-08-16)
• DATABASE WPI Section Ch, Week 198910 Derwent Publications Ltd., London, GB; Class A35, AN 1989-075399 XP002123646 -& SU 1 419 908 A (PATON ELECTROWELD IND), 30. August 1988 (1988-08-30)

**Beschreibung**

Die vorliegende Erfindung betrifft ein Verfahren zum Verschweissen von Kunststoffteilen, insbesondere von Kunststoffrohren, wobei die zu verschweissenden Rohre aus thermoplastischem Kunststoff koaxial ausgerichtet sind und mittels einstellbarem Druck gegeneinander drückbar sind.

Verfahren dieser Art sind auch unter dem Namen Heizelementstumpfschweissen bekannt. Dabei erfolgt der Schweissvorgang in zwei zeitlich voneinander getrennten Phasen nämlich in einem Aufheiz- und einem Fügevorgang.

Aus der WO 95/11 124 ist eine Stumpfschweissmaschine zum Verschweissen von Rohrenden bekannt, bei welcher die zu verschweissenden Teile durch eine Spannvorrichtung in koaxialer Lage zueinander gehalten werden. Die Vorrichtung weist u.a. einen Sensor zum Messen der Umgebungstemperatur, einen Zeitgeber sowie einen linearen Messumformer auf. Zur Überwachung des Füge- und Abkühlvorgangs wird vorgeschlagen, aufgrund der gemessenen Umgebungstemperatur eine vorbestimmte Abkühl-Zeitspanne festzulegen. Definitionsgemäss muss diese festgelegte Zeitspanne verstreichen, bevor die verschweissten Teile soweit abgekühlt sind, dass die Schweissnaht eine genügende Festigkeit aufweist und die Spannvorrichtung entfernt werden kann. Der für die Zeitdauer des Abkühlvorgangs massgebende Zeitgeber wird gestartet, nachdem vom linearen Messumformer festgestellt wurde, dass die Rohrenden sich um einen bestimmten Betrag gegeneinander verschoben haben. Anhand dieser Relativverschiebung soll sichergestellt werden, dass eine gegenseitige Durchdringung der Rohrenden stattgefunden hat und tatsächlich ein wirksames Verschweissen sichergestellt ist. Obwohl bei diesem Verfahren die Umgebungstemperatur zur Ermittlung des Erreichens der Festigkeit der verschweissten Teile herangezogen wird, werden nicht alle für eine einwandfreie Schweissung notwendigen Parameter berücksichtigt.

Aus der EP-0 535 454 A2 ist eine Einrichtung zum Verschweissen von Rohren aus thermoplastischem Kunststoff bekannt. Dabei werden die Rohre mittels Spannvorrichtungen in koaxialer Lage zueinandergehalten, wobei ein Handhebel zum axialen Verschieben von zumindest einer Spannvorrichtung vorgesehen ist. Die Einrichtung weist eine Prozesssteuerung auf, welche mit einem Datenspeicher zur Speicherung der für eine einwandfrei Schweissverbindung relevanten Angaben der Rohrdimension und des Rohrmaterials versehen ist. Die Prozesssteuerung ist im weiteren mit einer Anzeige versehen und mit Kontroll-Einrichtungen wirkverbunden. Während des Verschweissens können an der Anzeige die relevanten Schweissparameter abgelesen werden, so dass trotz Handbedienung eine Fehlbedienung weitgehend ausgeschlossen werden soll.

Schliesslich ist aus der DE 29 23 205 C2 ein Verfahren und eine Vorrichtung zum nahtlosen Verbinden von thermoplastischen Kunststoffhohlprofilen bekannt. Dabei werden die zu verbindenden Hohlprofile auf Stoss eingespannt und mittels einer die Profilendstücke umschliessenden Heizvorrichtung über den ganzen Umfang plastifiziert. In das Innere der Hohlprofile wird eine im Volumen veränderbare Stützvorrichtung eingebracht. Da die Heizvorrichtung die Profilendstücke umschliesst und die Stützvorrichtung während des Verbindungsvorgangs unter Überdruck gehalten wird, kann die zum Verbinden der beiden Hohlprofile notwendige Druckkraft durch die Wärmeausdehnung der Hohlprofile aufgebracht werden.

Allen bisher bekannten Einrichtungen zum Verschweissen von thermoplastischen Kunststoffrohren ist gemeinsam, dass zur Überwachung des Fügevorganges der Fügedruck während der Abkühlzeit kontrolliert wird. Dieser Ablauf wird in einem Weg-Druck-Kraft-Zeitverlauf-Diagramm erfasst. Es galt als gesichert, dass eine derart kontrollierte Prozessführung für die Schweissqualität entscheidend ist.

Es wurde nun in zahlreichen Untersuchungen festgestellt, dass für eine qualitativ hochwertige und reproduzierbare Schweissung auch andere Einflussgrössen entscheidend sind.

Ausgehend von bekannten Stand der Technik und den neu gewonnenen Erkenntnissen. ist es Aufgabe der Erfindung, ein Verfahren zum Verschweissen von thermoplastischen Kunststoffteilen vorzuschlagen, mittels welchen einwandfreie Schweissverbindungen reproduzierbar herstellbar sind.

Erfindungsgemäss wird diese Aufgabe durch die kennzeichnenden Merkmale des Anspruches 1 gelöst.

Weitere vorteilhafte Ausgestaltungen der Erfindung gehen aus den abhängigen Ansprüchen hervor.

An Hand der beiliegenden Zeichnungen wird die Erfindung näher beschrieben und erläutert.

Es zeigt:

Fig 1 einen schematischen Querschnitt durch eine Anordnung, mit der das erfindungsgemässe Verfahren durchgeführt werden kann; und

Fig 2 ein Temperatur-Zeit- Abkühlungsdiagramm.

Bei bekannten Verfahren zum Verschweissen von thermoplastischen Kunststoffrohren wird in der Regel der Fügedruck während der Abkühlphase kontrolliert. Erfinderseitig wurde jedoch erkannt, dass das eigentliche Kriterium für das Ende der Abkühlung die Festigkeit der Schweisszone ist. Die Festigkeit ist aber nicht direkt abhängig von der Zeit, sondern von der Temperatur des zu verschweissenden Materials. Bei einer Umgebungstemperatur von 40° C liegt die Materialtemperatur in der Schweisszone am Ende einer fixen Abkühlungszeit mehr als 30° C höher als bei 5°C Raumtemperatur. Die Erkenntnis, den Einfluss der Umgebung auf den Abkühlprozess zu erfassen und zu berücksichtigen, ist erfindungswesentlich. Damit kann die Abkühlzeit so gesteuert werden, dass die notwendige Materialfestigkeit in der Schweisszone sichergestellt ist.

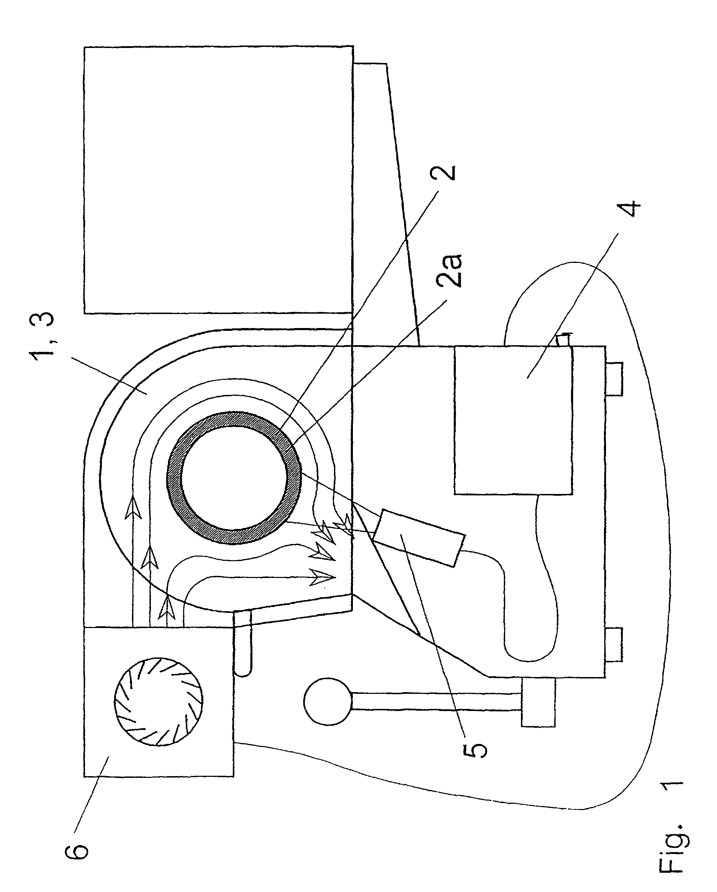

Die Figur 1 zeigt eine schematische Schnittansicht durch eine Anordnung 1 zum stirnseitigen Verschweissen von Kunststoffrohrenenden 2. Die Fügefläche ist mit 2a bezeichnet. Die Rohre sind in einer Schweissmaschine für kontakt- oder kontaktloses Anwärmen je in eine Spannvorrichtung 3 eingespannt. Ein Infrarot-Sensor 5 ist auf die Fügestelle gerichtet und erfasst die Temperatur des Rohrmaterials im Fügebereich. Dabei werden die Oberflächentemperaturen des Schweisswulstes erfasst. Diese Temperaturdaten werden laufend während des Abkühlprozesses in eine Elektronikeinheit 4 eingespeist und laufend verarbeitet.

Die Abkühlzeit wird durch die maximale Materialtemperatur $T_M$ in der Schweisszone bestimmt. Dies wird mittels numerischer Integration auf Grund der Signale des Infrarot-Sensors ($T_{BT}$-Sensors) 5 berechnet.

Die Materialtemperatur wird gemäss der folgenden Formel ermittelt:

$$T_{M(t)} = {_0\int^t}(T_{BT,}t) \, dt.$$

In dieser Formel bedeuten:

- $T_{M(t)}$ die Materialtemperatur in der Schweisszone über die Zeit,
- $T_{BT}$ die Oberflächentemperatur der Schweisszone, und
- t die Zeit.

Dieses Verfahren ermittelt die Materialtemperatur unter verschiedensten, konstanten und variablen Kühlleistungen. Somit wird die gewünschte Materialfestigkeit bei Ende des Abkühlprozesses sichergestellt. Abkühlzeitverkürzungen mittels erhöhter Kühlleistung sind möglich. Die Kühlleistung kann durch den Einsatz eines Kühlluftaggregates 6 mittels folgender Methoden erhöht werden:

- Ventilatorluft (hoher Luftvolumenstrom, niedriger Druck)
- Kompressorluft (niedriger Luftvolumenstrom, hoher Druck)

Diese Aggregate können in der Schweissmaschine integriert sein oder als optionales Zusatzbauteil auf die Schweissmaschine aufgesetzt werden.

Die Abkühlzeit ist abgeschlossen, wenn der vorgegebene Sollwert der Materialtemperatur unterschritten wird.

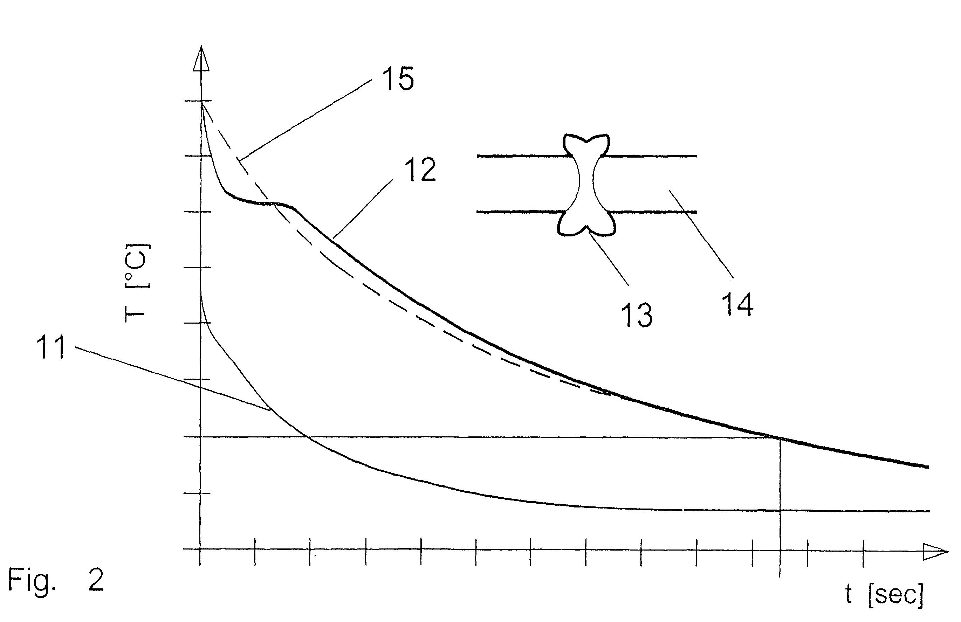

Die Figur 2 zeigt beispielsweise die Abkühlungskurven für eine Verschweissung. Die Kurve 11 zeigt den Verlauf der erfassten Temperaturen an der Oberfläche des Wulstes 13. Dieser Wulst entsteht durch Zusammenpressen des Aufschmelzbereiches der Rohre 14 als Folge der Einbringung einer vorbestimmten Wärmeenergie in die Rohrenden. Die zweite Kurve 12 zeigt die effektiv gemessene Rohrwandtemperatur. Die gestrichelte Linie 15 zeigt den berechneten Rohrwandtemperaturverlauf an. Es zeigt sich, dass der errechnete und der effektiv gemessene Verlauf der Temperatur in der Rohrwand praktisch übereinstimmen.

**Patentansprüche**

1. Verfahren zum Verschweissen von Teilen aus thermoplastischem Kunststoff mittels eines Stumpfschweissverfahrens, wobei die Teile in koaxialer Lage zueinander mittels Spannvorrichtungen (3) gehalten werden, und mittels einer Heizvorrichtung, die zwischen die Teile bringbar ist, aufgeheizt werden, wobei durch Erwärmung der freien zu verschweissenden Rohrenden (2) ein Aufschmelzbereich erzeugt wird, der beim Verpressen einen Wulst (13) bildet, und wobei laufend die Temperatur erfasst wird, **dadurch gekennzeichnet,**
   **dass** während des Abkühlprozesses einerseits mittels eines Infrarotsensors (5) berührungslos die Oberflächentemperatur des Wulstes und dass anderseits die Umgebungstemperatur in der Umgebung der Schweissmaschine von einer Elektronikeinheit (4) erfasst wird und
   **dass** die Abkühlzeit des Materials in der Schweisszone in Abhängigkeit des zeitlichen Verlaufes der Oberflächentemperatur und der Umgebungstemperatur von der Elektronikeinheit (4) gesteuert wird.

2. Verfahren nach Anspruch 1, **dadurch gekennzeichnet, dass** zusätzliche Kühlleistung in die Schweisszone eingebracht wird.

3. Verfahren nach Anspruch 2, **dadurch gekennzeichnet, dass** die zusätzliche Kühlleistung durch Ventilatorluft eingebracht wird.

4. Verfahren nach Anspruch 2, **dadurch gekennzeichnet, dass** die zusätzliche Kühlleistung durch Kompressorluft eingebracht wird.

5. Verfahren nach Anspruch 1, **dadurch gekennzeichnet, dass** die Erwärmung mit Kontakt oder kontaktlos erfolgt.

**Claims**

1. Process for welding parts made of thermoplastic material by means of a butt-welding method, the parts being held in the coaxial position in relation to each other by means of clamping devices (3), and heated up by means of a heating device which can be brought between the parts, a melting region being produced by heating the free pipe ends (2) to be welded, which region forms a bead (13) during pressing, and the temperature being continuously sensed, **characterized**

**in that**, during the cooling-down process, on the one hand the surface temperature of the bead is contactlessly sensed by means of an infra-red sensor (5) and on the other hand the ambient temperature around the welding machine is sensed by an electronic unit (4) and

**in that** the cooling-down time of the material in the welding zone is controlled by the electronic unit (4) as a function of the variation over time of the surface temperature and the ambient temperature.

2. Process according to Claim 1, **characterized in that** additional cooling power is introduced into the welding zone.

3. Process according to Claim 2, **characterized in that** the additional cooling power is introduced by blower air.

4. Process according to Claim 2, **characterized in that** the additional cooling power is introduced by compressor air.

5. Process according to Claim 1, **characterized in that** the heating is performed with contact or without contact.

**Revendications**

1. Procédé pour le soudage de pièces en matière synthétique thermoplastique au moyen d'un procédé de soudage bout à bout, les pièces étant maintenues en position coaxiale l'une par rapport à l'autre au moyen de dispositifs de serrage (3), et étant chauffées au moyen d'un dispositif de chauffage pouvant être amené entre les pièces, une zone de fusion étant produite par l'échauffement des extrémités de tube libres (2) à souder, laquelle forme un bourrelet (13) lors de la compression, et la température étant détectée en continu,

**caractérisé en ce que**

pendant le processus de refroidissement d'une part la température de la surface du bourrelet est détectée sans contact par un capteur infrarouge (5) et d'autre part la température ambiante aux environs de la machine à souder est détectée par une unité électronique (4) et

**en ce que** le temps de refroidissement du matériau dans la zone de soudure est régulé par l'unité électronique (4) en fonction de l'allure dans le temps de la température de la surface et de la température ambiante.

2. Procédé selon la revendication 1, **caractérisé en ce qu'**une puissance de refroidissement supplémentaire est introduite dans la zone de soudure.

3. Procédé selon la revendication 2, **caractérisé en ce que** la puissance de refroidissement supplémentaire est introduite par de l'air de ventilateur.

4. Procédé selon la revendication 2, **caractérisé en ce que** la puissance de refroidissement supplémentaire est introduite par de l'air de compresseur.

5. Procédé selon la revendication 1, **caractérisé en ce que** l'échauffement s'effectue par contact ou sans contact.

Fig. 1

Fig. 2

EP 0 899 085 B1